Europäisches Patentamt

European Patent Office

Office européen des brevets

(19)

(11) Publication number: **0 058 736**
**B1**

(12) EUROPEAN PATENT SPECIFICATION

(45) Date of publication of patent specification: **11.09.85**

(21) Application number: **81101317.6**

(22) Date of filing: **24.02.81**

(51) Int. Cl.⁴: **F 27 B 9/16,** C 21 D 9/00,
B 65 G 29/00

(54) **Conveyor furnace with a rotating carrier.**

(43) Date of publication of application:
**01.09.82 Bulletin 82/35**

(45) Publication of the grant of the patent:
**11.09.85 Bulletin 85/37**

(84) Designated Contracting States:
**BE DE FR IT NL SE**

(56) References cited:
**DE-A-2 822 915**
**FR-A-1 224 431**
**GB-A- 893 891**
**US-A-2 676 006**
**US-A-2 873 019**

(73) Proprietor: **DELTA CAPILLARY PRODUCTS
LIMITED**
**Alexander Street**
**Dundee DD3 7DT (GB)**

(72) Inventor: **Cameron, Ian David**
**10 McNab Street**
**Dundee (GB)**

(74) Representative: **Stokes, Graeme Wilson et al
c/o Cruikshank & Fairweather 19 Royal
Exchange Square
Glasgow G1 3AE Scotland (GB)**

Courier Press, Leamington Spa, England.

## Description

This invention relates to a conveyor furnace, a heating means provides a hot zone, and a continuous conveyor conveys articles through the hot zone.

Conveyor furnaces are used in the heat treatment of articles being produced on a mass production basis, for example in the annealing of pieces of copper tube in the manufacture of copper pipe fittings. The articles are introduced to the conveyor whereon they are carried through the hot zone and thereafter discharged. In this method of heat treatment, the determination of practical values for the temperature of the hot zone and the speed of the conveyor is known; and these values can be determined by trial. Known conveyor furnaces, particularly those intended for heat treatment of relatively small articles such as the pieces of copper tube mentioned above, include a conveyor having a continuous belt of metal mesh or like flexible structure with interlinked elements. The top run of the belt carries the articles through a furnace chamber while the bottom run of the belt returns below the furnace chamber. In the other known conveyor furnaces, the conveyor is a roller conveyor; alternatively the conveyor is an overhead type in which case the articles are suspended. Finally, the conveyor furnace may be of the rotating hearth type in which case the articles are carried around on the hearth within the furnace chamber as described for example in U.S. Patent Specification No. 2,676,006.

In general, known conveyor furnaces suffer from disadvantages caused by the fact that several load bearing mechanical components of the furnace are subjected to the conditions of the hot zone; these furnaces tend to be bulky, and their thermal efficiency is relatively low.

Some of the mechanical components of the known conveyor furnaces are continuously in the hot zone and have a reduced operational life as a result. Others of such components for example the flexible belt, enter the hot zone intermittently and therefore experience temperature fluctuation which not only reduces operational life, but also contributes to overall thermal inefficency of the furnace. The bulkiness of the known conveyor furnace is largely attributable to the chamber required for the attainment of the desired heat treatment temperature.

The present invention seeks to obviate or mitigate the disadvantages outlined above.

According to the present invention, there is provided a conveyor furnace comprising heating means for providing a hot zone, means defining an input station for receiving articles to be heat treated, means defining an output station for discharging heat treated articles, a carrier mounted for rotation about an upright axis and defining a circular path centred on said axis and lying in said hot zone, and stationary guide means above the carrier for guiding articles over the said path when the articles are on the carrier from the input station to the output station; the said guide means comprising a rail of open-coiled spiral configuration, and the heating means comprising a bank of radiant heaters, and a support common to said heaters and carrying said heaters, said support together with said heaters being shiftable independently of carrier and of said rail.

Thus, the rotatable carrier carries articles introduced thereto along the circular path while the stationary guide continuously nudges the articles, due to its spiral configuration, over said path with the result that the articles progress from the input to the output along a resultant path whose length is determined effectively by a factor representing the spiral pitch of the guide. This gives the advantage of a compact arrangement, enables the article-engaging parts of the conveyor to remain continuously in the hot zone with a consequent improvement in thermal efficiency, and allows of a generally simplified mechanical construction.

Embodiments of the present invention will now be described, by way of example, with reference to the accompanying drawings in which:—

Fig. 1 is a diagrammatic representation in sectional elevation of a conveyor furnace in accordance with the present invention;

Fig. 2 is a diagrammatic plan view of the apparatus of Fig. 1;

Fig. 3 is a sectional elevation on the line III—III in Fig. 2 with some parts omitted for clarity;

Fig. 4 is a diagrammatic plan view similar to part of Fig. 2, but showing a modification; and

Fig. 5 is sectional elevation on the line V—V in Fig. 4 and to a larger scale.

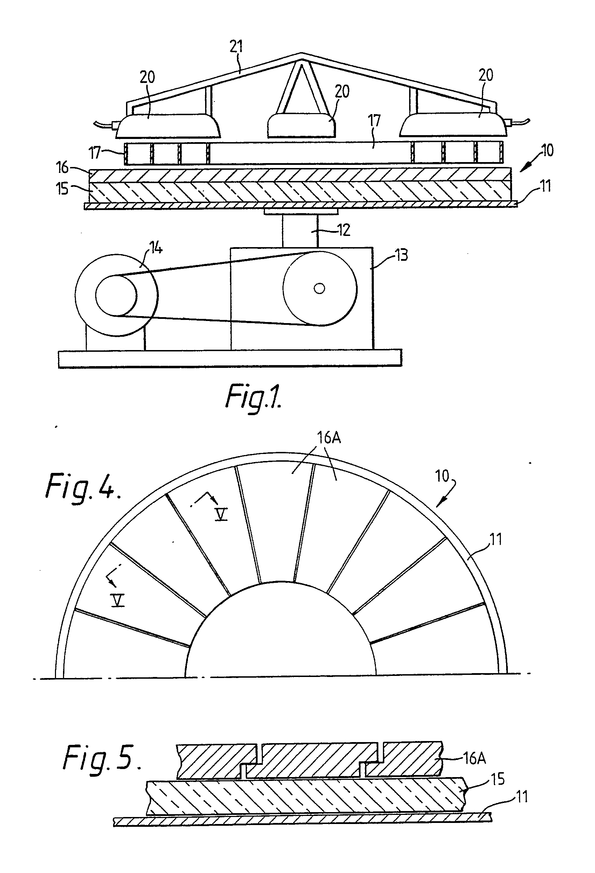

In Figs. 1 to 3 of the drawings, the conveyor furnace comprises, basically, a heating means 20 for providing a hot zone therebelow, and a continuous conveyor indicated generally by reference number 10 for conveying articles 19 through the hot zone between an input 18 and a discharge 22.

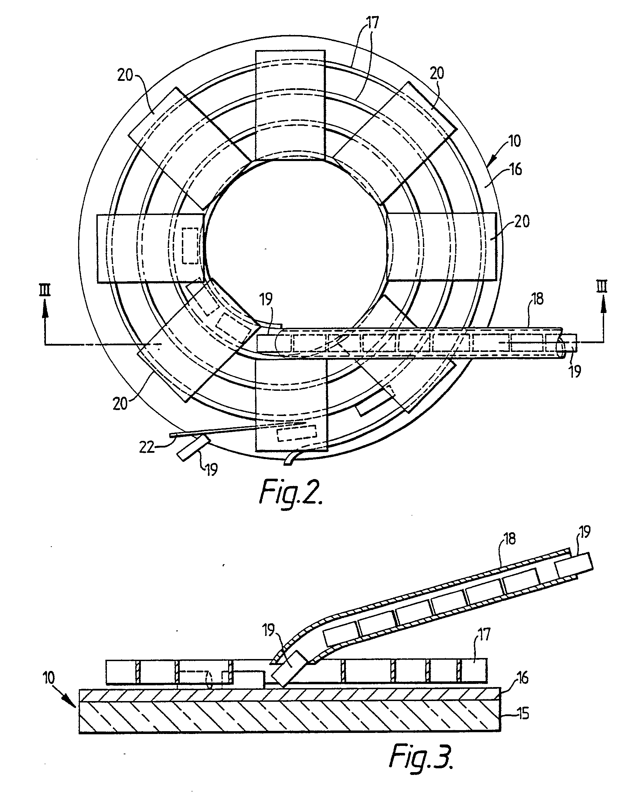

More particularly, the conveyor 10 comprises a rotatable carrier having a circular steel support plate 11 which is mounted on a vertical drive shaft 12 rotatable by means of a variable speed drive comprising a reduction gearbox 13 and drive motor 14. The support plate 11 carries a thermally insulating layer 15 which is covered by a heat and preferably wear resistant layer 16. The drive means 13, 14 is operable to rotate the assembly 11, 15, 16 at a desired speed so that the top side of the carrier layer 16 defines circular paths about the axis of shaft 12. A guide 17 of open-coiled configuration is arranged over the carrier layer 16 and is held by a fixed support (not shown) slightly spaced from the top surface of the layer 16. The centre of the spiral configuration is coincident with the axis of shaft 12. Thus, the guide 17 which is of heat resistant steel flat bar extends across the circular path defined by the carrier layer 16. A feed tube 18 (Figs. 2 and 3) is arranged with its lower end at the inner end of the guide 17 so that the copper tubes 19 can be introduced to the carrier layer 16 between the turns of the guide 17.

The heating means comprises a bank of radiant heaters 20 arranged above the guide 17 for directing heat on to the carrier layer 16 and the path defined thereby. The heaters 20 are gas fuelled, but any type of heating means may be employed capable of providing a hot zone as required. The heaters 20 are shown as being carried by a supporting frame 21. In order to facilitate the general operation and maintenance of the furnace, it is preferable that the bank of heaters 20 and the guide 17 be carried by respectively independent supports which may incorporate pivots to enable the heater bank and the guide to be swung independently clear of the rotatable carrier 11, 15, 16. At the outer end of the guide 17, there is fixed a deflector plate 22 for discharging the tubes 19 as hereinafter described.

The pieces of copper tube 19 are components in the production of copper pipe fittings and, typically, are of the order of 20mm diameter and 80mm length. The object of the heat treatment in this case is to anneal the tubes 19. The rotatable carrier is of the order of 1 meter to 1.5 meters diameter and the distance between the turns of the guide 17 is chosen to provide sufficient clearnce for the passage of the tubes 19 through the guide 17 without the possibility of two of the tubes overlapping at any point within the guide which could cause jamming.

In Figs. 4 and 5, parts corresponding to those in Figs. 1 to 3 are given the reference numerals used in Figs. 1 to 3. The carrier layer 16A consists of a set of segment-shaped elements made of cast iron or other heat and wear resistent material. The segment shaped elements are laid side-by-side to form a complete carrier surface and are preferably inter-engaged through rebated side portions as shown in Fig. 5 for the purpose of promoting positional stability. The arrangement of the individual segment-shaped elements accommodates distortion arising from heating an annular shape.

The manner of operation and use of the furnace is as follows. With the heaters 20 operating, the drive means 13, 14 is operated to cause the carrier 11, 15, 16 to rotate at a speed of the order of 4 revolutions per minute. The tubes 19 are fed through the input or feed tube 18, for example by a vibratory feed (not shown), so that the tubes 19 are introduced to the inner end of the guide 17 and on to the upper surface of the carrier layer 16 or 16A. The tubes 19 are thereupon carried around the rotational axis or centre of the carrier and are simultaneously shifted relatively thereto radially with respect to the centre of the carrier by virtue of engagement with the adjacent wall of the guide 17. When the tubes 19 have completed sufficient turns to completly traverse the radial extent of the guide 17, they are discharged into a quench bath (not shown) by means of the deflector plate 22. It will be noted that whereas the tubes 19 are closely spaced or touching at the point of introduction to the guide 17, the gaps between the tubes 19 progressively increase due to the radially outwards shifting of the tubes. This radially outwards shifting of the tubes is of particular advantage in heat treating tubular or cylindrical items since they tend to roll simultaneously with the outwards shifting so that a more even heating effect is achieved.

Modifications of the furnace described above, within the scope of the present invention, include employing a 'multi-start' guide providing either twin channels for articles to be heat treated, or providing channels of mutually different widths to accommodate different sized articles; using electrical radiant heaters, employing a carrier whereof the top face is of slightly frusto-conical configuration to encourage radially outward shifting of the articles the scroll guide being of complementary configuration; and introducing a friction drive element at some point in the drive to the carrier so that in the event of a jam occurring in the scroll guide the said element would allow slippage to occur and so avoid damage to the furnace.

## Claims

1. A conveyor furnace comprising heating means (20) for providing a hot zone, means defining an input station (18) for receiving articles (19) to be heat treated, means defining an output station (22) for discharging heat treated articles (19), a carrier (10) mounted for rotation about an upright axis and defining a circular path centred on said axis and lying in said hot zone, and stationary guide means (17) above the carrier (10) for guiding articles (19) over the said path when the articles (19) are on the carrier (10) from the input station (18) to the output station (22); characterised in that the said guide means comprises a rail (17) of open-coiled spiral configuration, and the heating means comprises a bank of radiant heaters (20), and by the provision of a support (21) common to said heaters (20) and carrying said heaters (20), said support (21) together with said heaters (20) being shiftable independently of said carrier (10) and said rail (17).

2. A conveyor furnace according to claim 1, characterised in that the carrier (10) comprises a layer (16A) of individual segment-shaped elements laid side-by-side.

3. A conveyor furnace according to claims 1 or 2; characterised in that the input station comprises a chute (18) arranged with its lower end adjacent the inner end of the rail (17).

## Patentansprüche

1. Drehherdofen mit einer Heizeinrichtung (20) zur Erzeugung einer heißen Zone, mit einer eine Einbringstation (18) bildenden Einrichtung, welche mit Wärme zu behandelnde Teile (19) empfängt, mit einer eine Ausbringstation (22) bildenden Einrichtung zum Ausbringen der wärmebehandelten Teile (19), mit einem Support (10), welcher zur Drehung um eine aufrechte Achse angeordnet ist und eine kreisförmige Bahn beschreibt, die sich in der heißen Zone befindet, und deren Mitte auf der Achse liegt, und mit einer ortsfesten Führungseinrichtung (17) oberhalb des Supports (10) zur Führung der Teile (19) über die Bahn von der Einbringstation (18) zur Auslaßstation (22), wenn die Teile sich auf dem Support (10) befinden, dadurch gekennzeichnet, das die Führungseinrichtung eine Führungsschiene (17) aufweist, welche offenspiralförmig angeordnet ist, und die Heizeinrichtung eine Reihe von Radial-Heizvorrichtungen (20) aufweist, und daß unter Vorsehung einer Tragevorrichtung (21), welche mit den Heizvorrichtungen (20) verbunden ist und diese trägt, die Tragevorrichtung (21) zusammen mit den Heizvorrichtungen (20) unabhängig bezüglich des Supports (10) und der Führungsschiene (17) verschiebbar ist.

2. Drehherdofen nach Anspruch 1, dadurch gekennzeichnet, daß der Support (10) eine Schicht (16A) von einzelnen segmentförmigen Elementen aufweist, welche Seite an Seite angeordnet sind.

3. Drehherdofen nach Anspruch 1 oder 2, dadurch gekennzeichnet, daß die Eingabestation eine Rutschvorrichtung (18) aufweist, welche so angeordnet ist, daß ihr unteres Ende in der Nähe des inneren Ende der Führungsschiene (17) angeordnet ist.

**Revendications**

1. Four convoyeur comprenant des moyens de chauffage (20) pour réaliser une zone chaude, des moyens définissant un poste d'entrée (18) pour recevoir les articles (19) à traiter thermiquement, des moyens définissant un poste de sortie (22) pour évacuer les articles traités thermiquement (19), un transporteur (10) monté rotatif autour d'un axe vertical et définissant une voie circulaire centrée sur ledit axe et s'étendant dans la zone chaude, et des moyens de guidage fixes (17) disposés au-dessus du transporteur (10) pour guider les articles (19) au-dessus de ladite voie lorsque ces articles (19) se trouvent sur le transporteur (10) entre le poste d'entrée (18) et le poste de sortie (22), caractérisé en ce que les moyens de guidage comprennent un rail (17) présentant la forme d'une spirale enroulée ouverte, en ce que les moyens de chauffage comprennent une rampe d'éléments chauffants par rayonnement (20) et en ce qu'il est prévu un support (21) commun à tous ces éléments chauffants (20) et portant ces éléments chauffants (20), ledit support (21) avec les éléments chauffants (20) étant déplaçable indépendamment du transporteur (10) et du rail (17).

2. Four convoyeur selon la revendication 1, caractérisé en ce que le transporteur (10) comprend une couche (16A) d'éléments individuels en forme de segments disposés côte à côte.

3. Four convoyeur selon la revendication 1 ou 2, caractérisé en ce que le poste d'entrée comprend une glissière inclinée (18) dont l'extrémite in-ferieure est adjacente à l'extrémite interne du rail (17).

Fig.1.

Fig.4.

Fig.5.

Fig.2.

Fig.3.